# EUROPEAN PATENT APPLICATION

(11) **EP 4 556 320 A1**
(43) Date of publication of application: **21.05.2025**
(21) Application number: 23857059.2
(22) Date of filing: 21.07.2023
(51) Int. Cl.: B60R 21/237, B60R 21/207

(54) **AIR BAG DEVICE MANUFACTURING METHOD, AND AIR BAG DEVICE**

(30) Priority: 24.08.2022 JP 2022133343
(71) Applicant: Autoliv Development AB, 44783 Vargarda (SE)
(72) Inventor: KOBAYASHI, Yuto, Yokohama-shi, Kanagawa 222-8580 (JP); SAKURAI, Tsutomu, Yokohama-shi, Kanagawa 222-8580 (JP)
(74) Representative: Müller Verweyen
(86) International application number: PCT/JP2023/026841
(87) International publication number: WO 2024/042943

(57) **Abstract**

A method of manufacturing an airbag device according to the present invention includes the steps of: folding, downwards from an upper side of a vehicle (100), a protruding portion (41e) into a roll shape; folding downwards an end of the roll-shaped protruding portion (41e) to come into contact with a side surface of the horizontal portion (41d) so that a longitudinal axis of the protruding portion (41e) is aligned in an upward-downward direction; folding a third portion (41c) into a roll shape or into a bellows shape; disposing the third portion (41c) having been folded into a roll shape between the protruding portion (41e) and the inflator (42); folding the second portion (41e), disposed on a side opposite to the first portion (41a) with respect to the accommodating portion (411), back toward the first portion (41a); and folding the first portion (41a) so as to wind around and cover the protruding portion (41e) and the third portion (41c).

## Description

### TECHNICAL FIELD

The present invention relates to a method of manufacturing an airbag device and an airbag device.

### BACKGROUND ART

Vehicles in recent years have been equipped with airbag devices. An airbag device is a safety device which is actuated in case of an emergency such as a vehicle collision. When expanded and deployed by a gas pressure, the airbag device receives and thus protects the occupant. There are various types of airbag devices to be used depending on their installation site and on their application. For example, a front airbag is provided in a center of a steering wheel and is intended to protect a driver from a collision in a front-to-rear direction. Also provided are: curtain airbags, which are expanded and deployed along the side window from the wall near the ceiling to protect the occupants from a side collision or subsequent rollover; and side airbags, which are expanded and deployed from a side of a seat into the immediate side area of the occupant. A certain side airbag prevents the occupant seated in the driver seat from moving toward the assistant driver seat in the event of a side collision or the like (see Patent Literature 1).

### CITATION LIST

### Patent Literature

Patent Literature 1: Japanese Unexamined Patent Application Publication No. 2010-115947

### SUMMARY OF INVENTION

### TECHNICAL PROBLEM

The side air bag described in Patent Literature 1 in the expanded and deployed state, however, may fail to provide sufficient protection of the occupant from the impact depending on the size of the vehicle, the installation place of the airbag, and the shape of the airbag.

The present invention has been made in view of such circumstances, and an object of the present invention is to provide a method of manufacturing an airbag device capable of expanding and deploying the airbag to provide sufficient protection of the occupant. Another object of the present invention is to provide such an airbag device.

### SOLUTION TO PROBLEM

A method of manufacturing an airbag device according to the present invention is a method of manufacturing an airbag device (4) that comprises an airbag cushion (41) operable to expanded and deployed in a passenger compartment (1) of a vehicle (100) and thus to restrain an occupant seated on a seat (2, 3) from a side. The method includes the steps of: preparing the airbag cushion (41) including: a horizontal portion (41d) having an accommodating portion (411) for accommodating an inflater (42) for injecting a gas for expansion and deployment, the horizontal portion (41d) being operable to be deployed horizontally in the vehicle (100); and a protruding portion (41e) being operable to be deployed upward from a central portion of the horizontal portion (41d), wherein the horizontal portion (41d) of the airbag cushion (41) includes a first portion (41a) extending from the accommodating portion (411), a second portion (41b) extending horizontally in an opposite direction to the first portion (41b), and a third portion (41c) extending further from the second portion (41b); folding downwards from an upper side of the vehicle (100), the protruding portion (41e) into a roll shape or into a bellows shape; folding the protruding portion (41e) to come into contact with a side surface of the horizontal portion (41d) so that a longitudinal axis of the folded protruding portion (41e) is aligned in an upward-downward direction; folding the third portion (41c) into a roll shape or into a bellows shape; disposing the folded third portion (41c) between the protruding portion (41e) and the inflator (42); folding the second portion (41b), the protruding portion (41e), and the third portion (41c), all disposed on a side opposite to the first portion (41a) with respect to the accommodating portion (411) back toward the first portion (41a); and folding the first portion (41a) so as to wind around and cover the protruding portion (41e) and the third portion (41c).

The method of manufacturing the airbag device according to the present invention further includes, before the step of folding the third portion (41c) into a roll shape or into a bellows shape, a step of folding an end of the third portion (41c) into the interior of the airbag cushion (41) in a direction toward the second portion (41b).

In the method of manufacturing the airbag device according to the present invention, the airbag cushion (41) includes a bottom-surface gusset portion (41g) forming a surface facing the protruding portion (41e) when the airbag cushion (41) is in a deployed state, and the method further includes a step of folding the bottom-surface gusset portion (41g) so that an inner surface of the airbag cushion (41) comes into contact with the bottom-surface gusset portion (41g) and that an outer surface of the airbag cushion (41) is mountain-folded.

An airbag device according to the present invention is an airbag device that includes an airbag cushion (41) operable to be expanded and deployed in a passenger compartment (1) of a vehicle (100) and thus to restrain an occupant seated on a seat (2, 3) from a side, wherein the airbag cushion (41) includes: a horizontal portion (41d) having an accommodating portion (411) for accommodating an inflator (42) for injecting a gas for expansion and deployment, the horizontal portion being operable to be deployed in a horizontal direction of the vehicle (100); and a protruding portion (41e) being operable to be deployed in an upward direction of the vehicle (100) from a central portion of the horizontal portion (41d), wherein the horizontal portion (41d) includes a first portion (41a) extending from the accommodating portion (411), a second portion (41b) extending horizontally in an opposite direction to the first portion (41a), and a third portion (41c) further extending from the second portion (41b), wherein the airbag device (4) includes: a configuration in which the protruding portion (41e) is folded, downwards from an upper side of the vehicle (100), into a roll shape or into a bellows shape; a configuration in which the roll-shaped protruding portion (41e) is folded to come into contact with a side surface of the horizontal portion (41d) so that a longitudinal axis of the folded protruding portion (41e) is aligned in an upward-downward direction; a configuration in which the third portion (41c) is folded into a roll shape or into a bellows shape; a configuration in which the folded third portion (41c) is disposed between the protruding portion (41e) and the inflator (42); a configuration in which the second portion (41b), the protruding portion (41e), and the third portion (41c), all disposed on a side opposite to the first portion (41b) with respect to the accommodating portion (411), are folded back toward the first portion (41a); and a configuration in which the first portion (41a) is folded so as to be wound around and cover the protruding portion (41e) and the third portion (41c).

### ADVANTAGEIOUS EFFECTS OF INVENTION

The method of manufacturing an airbag device according to an embodiment of the present invention provides a method of manufacturing an airbag device expanding and deploying the airbag cushion so as to be able to provide sufficient protection of the occupant.

### BRIEF DESCRIPTION OF DRAWINGS

FIG. 1 is a perspective view schematically illustrating the inside of a vehicle equipped with a side airbag device.
FIG. 2 is a plan view schematically illustrating the inside of the vehicle equipped with the side airbag device.
FIG. 3 is a cross section view of the side airbag device taken along line III-III in FIG. 1.
FIG. 4 is a perspective view illustrating an example airbag cushion.
FIG. 5 is an explanatory diagram illustrating a method of folding the airbag cushion.
FIG. 6 is an explanatory diagram illustrating a method of folding the airbag cushion.
FIG. 7 is an explanatory diagram illustrating the process of deploying the airbag cushion.
FIG. 8 is a front view illustrating the airbag cushion in a completely deployed state.

### DESCRIPTION OF EMBODIMENTS

An embodiment of the present invention is described below based on the drawings. The "upward" direction, the "downward" direction, and the "upward-downward (vertical)" direction referred to in the descriptions below indicate a direction on a line connecting the center of the roof of the vehicle to the center of the floor of the vehicle, where the direction toward the roof is the "upward" direction and the direction toward the floor is the "downward" direction. The "forward" direction, the "backward (rearward)" direction and "front-to-rear" directions of a vehicle indicate directions in which the vehicle is traveling, where the direction in which the vehicle is progressing is referred to as the "forward" direction, and the direction in which the vehicle is retrogressing is referred to as the "backward (rearward)" direction. Furthermore, the width direction of the vehicle is the direction in which the seats are usually arranged side by side with each other, and is the direction perpendicular to the above-mentioned "front-to-rear" direction. The width direction includes the "rightward direction," which is the direction towards the side of the driver seat 2 and the "leftward direction," which is the direction towards the side of the assistant driver seat 3. A direction along a plane orthogonal to the upward-downward (vertical) direction (a plane extending both in the front-to-rear direction and in the width direction) is defined as a horizontal direction.

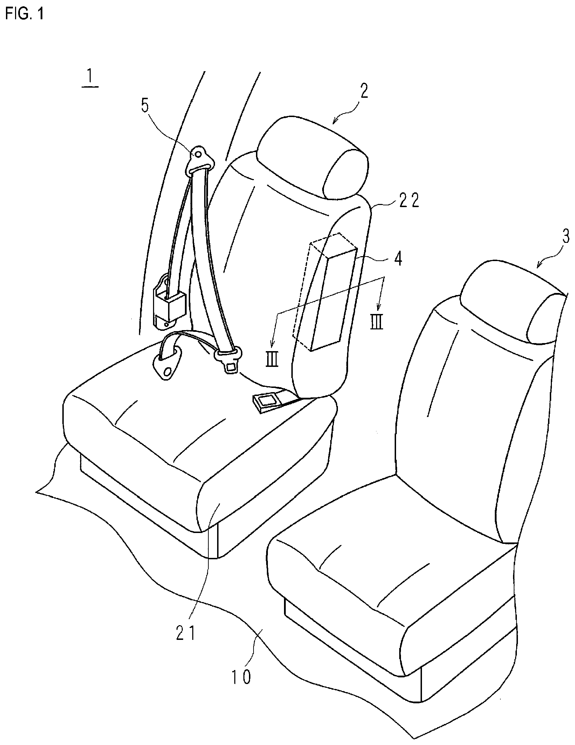

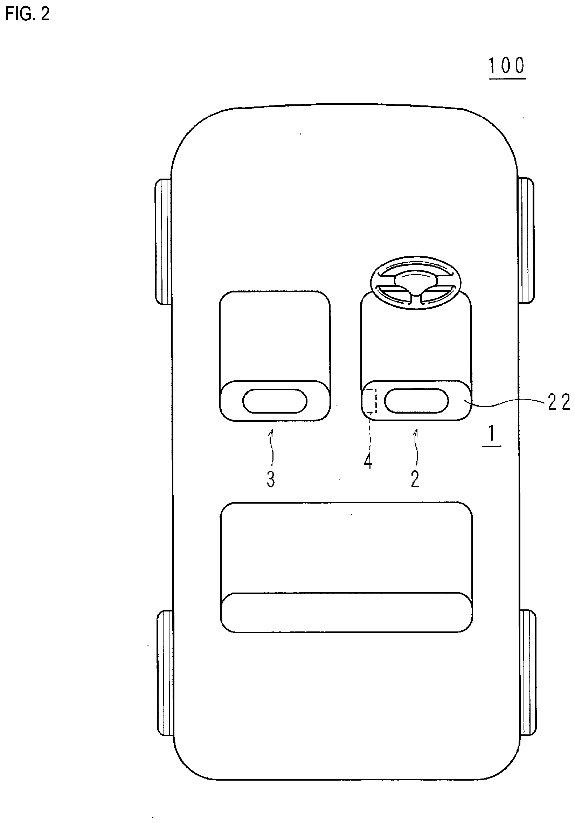

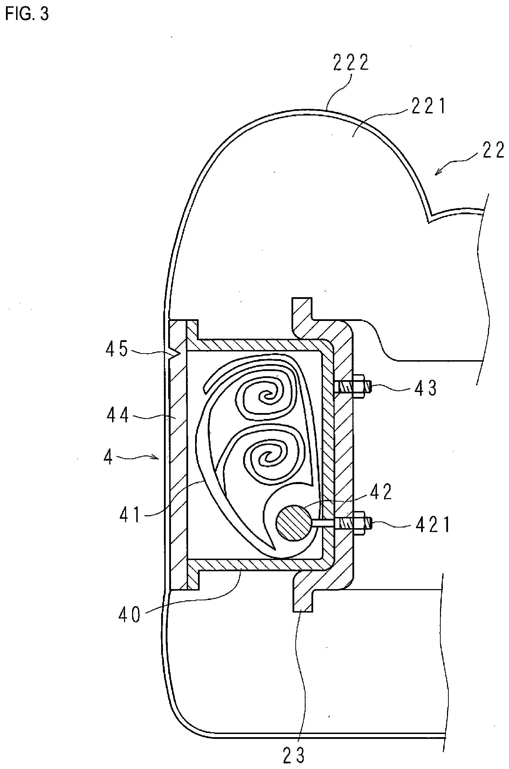

FIG. 1 is a perspective view schematically illustrating the inside of a vehicle 100 equipped with a side airbag device 4. FIG. 2 is a plan view schematically illustrating the inside of the vehicle 100 equipped with the side airbag device 4. FIGS. 1 and 2 illustrate a driver seat (seat) 2 and an assistant driver seat (seat) 3 installed on a floor 10 of a passenger compartment 1, as well as a seatbelt 5. The driver seat 2 includes a seat portion 21 and a backrest 22 that rises upward from the rear side of the seat portion 21. The backrest 22 includes a cushioning material 221 and a skin 222 covering a surface of the cushioning material 221 (see FIG. 3). The cushioning material 221 is made of polyurethane resin, for example, and the skin 222 is made of woven fabric, synthetic leather, natural leather, or the like, for example.

As illustrated in FIG. 2, in the driver seat 2 installed in the passenger compartment 1 of the vehicle 100, the side airbag device (airbag device) 4 is disposed inside the backrest 22 of the driver seat 2 on the side near the assistant driver seat 3. As illustrated in FIG. 1, the side airbag device 4 has a rectangular parallelepiped shape. The side airbag device 4 may be disposed inside the backrest of the assistant driver seat 3 on the side near the driver seat 2.

FIG. 3 is a cross section view of the side airbag device 4 taken along line III-III in FIG. 1. The upward direction and the downward direction in this figure correspond, respectively, the forward direction and the backward (rearward) direction of the vehicle 100. The side airbag device 4 includes an airbag cushion 41 and an inflator 42, which are stowed in the stowage portion 40.

The airbag cushion 41 is, for example, a bag-shaped body made of cloth reinforced by the weaving in of high-strength fibers such as a nylon fiber or the like. The airbag cushion folded in a roll shape is stowed inside the stowage portion 40. The shape and folding method of the airbag cushion 41 will be described later. The inflator 42 is secured to the skeletal frame 23 of the backrest 22 by the stud bolts 421 with the base plate of the stowage portion held in between. The inflator 42 has its gas for expansion and deployment stored inside the airbag cushion 41.

The stowage portion 40 is a box-shaped body having one open surface, and is fixed to the skeleton frame 23 of the backrest 22 by stud bolts 43 and the above-described stud bolts 421. The opening of the stowage portion 40 is oriented towards the assistant driver seat 3, and is covered by a cover plate 44 that is flush with the side surface of the driver seat 2. The cover plate 44 is a resin plate having a lower strength than the stowage portion 40. A cleavage groove 45 is formed in the front portion of the outer surface of the cover plate 44 over the entire length in the upward-downward direction. The airbag cushion 41 is expanded explosively by the action of the injected gas of the inflator 42 at the time of a collision of the vehicle 100, ruptures the cover plate 44 at the position of the cleavage groove 45 to break through the skin 222, and is deployed sideways. Although the cleavage groove 45 illustrated in FIG. 3 is formed on the outer surface of the cover plate 44, it may be formed on the inner surface of the cover plate 44.

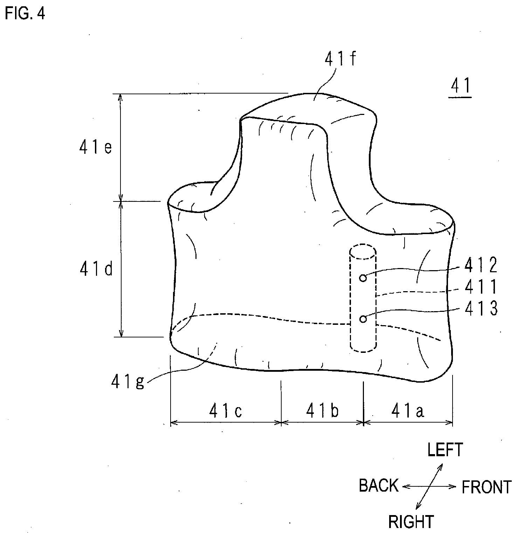

FIG. 4 is a perspective view illustrating an example of the airbag cushion 41. FIG. 4 illustrates the airbag cushion 41 in an expanded state. Directions mentioned in FIG. 4 indicate the directions described above with respect to the vehicle 100. The airbag cushion 41 having a shape with a raised middle section includes: a horizontal portion 41d that extends and is deployed horizontally (that is, in the front-to-rear direction and in the width direction) in the vehicle 100; and a protruding portion 41e that is deployed upward in the vehicle 100 from a central portion, in the front-to-rear direction, of the horizontal portion 41e. The airbag cushion 41 is formed by joining two panels each having a shape with a raised middle section in a plan view. The two panels are joined by means of an upper-surface gusset portion 41f and a bottom-surface gusset portion 41g interposed in between to give a greater thickness in the width direction. The two panels form side surfaces of the horizontal portion 41d and of the protruding portion 41e. An accommodating portion 411 that accommodates the cylinder-type (tube-type) inflator 42 is provided inside the airbag cushion 41. The accommodating portion 411 is provided with insertion holes 412, 413, into which stud bolts 421 of the inflator 42 are inserted. The inflator 42 is actuated in the event of an emergency, such as a collision of a vehicle 100 and the like, and injects gas into the airbag cushion 41. The airbag cushion 41 is expanded explosively by the action of the injected gas of the inflator 42. The pressure to expanding the airbag cushion 41 acts on the cover plate 44 with the bottom plate of the stowage portion 40 serving as a support. The airbag cushion 41 ruptures the cleavage groove 45, and is expanded and deployed to the outside of the stowage portion 40. Hereinafter, the act of expansion and deployment is also simply referred to as the act of deployment.

In the following description, the horizontal portion 41d of the airbag cushion 41 is assumed to be composed of three conceptually different portions. The front portion is referred to as a first portion 41a, a portion located immediately behind (rearward from) the accommodating portion 411 is referred to as a second portion 41b, and a portion located further rearward from the second portion 41b is referred to as a third portion 41c. The first portion 41a is a portion extending from one end portion of the airbag cushion 41 in the front-rear direction to the vicinity of the accommodating portion 411. The second portion 41b is a portion extending by a predetermined length in a direction opposite to the first portion 41a in the front-to-rear direction when viewed from the accommodating portion 411. The third portion 41c is a portion further extending from the second portion 41a and disposed on the opposite side of the first portion 41b with respect to the accommodating portion 411. The second portion 41b is mainly provided at a position corresponding to a portion of a space between the two adjacent seats (that is, the driver seat 2 and the assistant driver seat 3). The first portion 41a, the second portion 41b, and the third portion 41c are conceptual divisions. Neither the boundary between the first portion 41a and the second portion 41b nor the boundary between the second portion 41b and the third portion 41c is not precise in any way. In addition, the position of the accommodating portion 411 illustrated in FIG. 4 is the boundary between the first portion 41a and the second portion 41b, but it is not limited thereto. The position of the accommodating portion 411 may be moved forward or rearward from the position illustrated in FIG. 4. To put it differently, when the boundary dividing the first portion 41a and the second portion 41b is set to the vicinity of the front end portion of the raised middle section in the front-rear direction as illustrated in FIG. 4 regardless of the position of the accommodating portion 411, the accommodating portion 411 may be located either in the first portion 41a or in the second portion 41b.

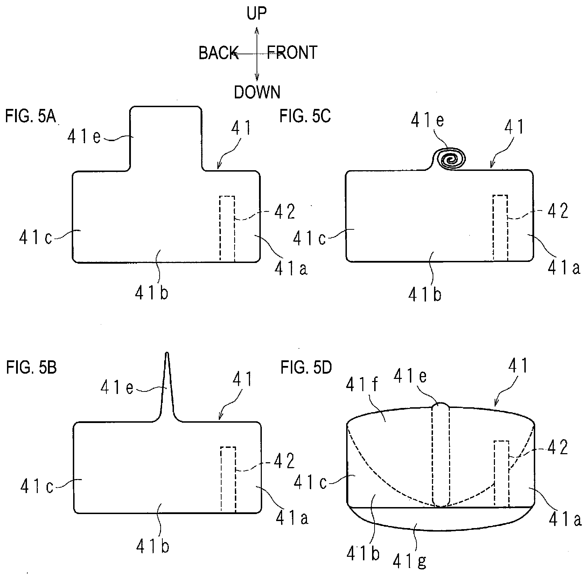

FIG. 5 to FIG. 6 are explanatory diagrams illustrating a method of expansion and deployment of the airbag cushion 41. FIG. 5 illustrates a method of folding the protruding portion 41e. It should be noted that FIG. 5 is a diagram depicting the airbag cushion 41, as viewed from the left-hand side. As illustrated in the FIGS. 5A and 5B, the protruding portion 41e is flattened in the front-rear direction to be transformed into a sheet-like shape having sides in the upward-downward direction and the width direction. Thereafter, as illustrated in FIG. 5C, the protruding portion 41e, now in a sheet-like state, is folded into a roll shape downwards from its upper side with its upper end first folded toward the first portion 41a side using the width direction as a roll axis direction. In this case, the upper end of the protruding portion 41e may be first folded forward to form a roll shape, but alternatively, the upper end may also be first folded backward to form a roll shape. The protruding portion 41e folded into a roll shape as illustrated in FIG. 5C is folded together with the upper-surface gusset portion 41f so that the roll axis (that is, the longitudinal axis) is aligned in the upward-downward direction and the protruding portion 41e comes into contact with the left-hand surface (side surface) of the horizontal portion 41d as illustrated in FIG. 5D. When the airbag cushion 41 is transformed into the state illustrated in FIG. 5D, the bottom-surface gusset portion 41g is folded such that the inner surface of the airbag cushion 41 comes into contact with the bottom-surface gusset portion 41g and the outer surface of the bottom-surface gusset portion 41g is mountain-folded.

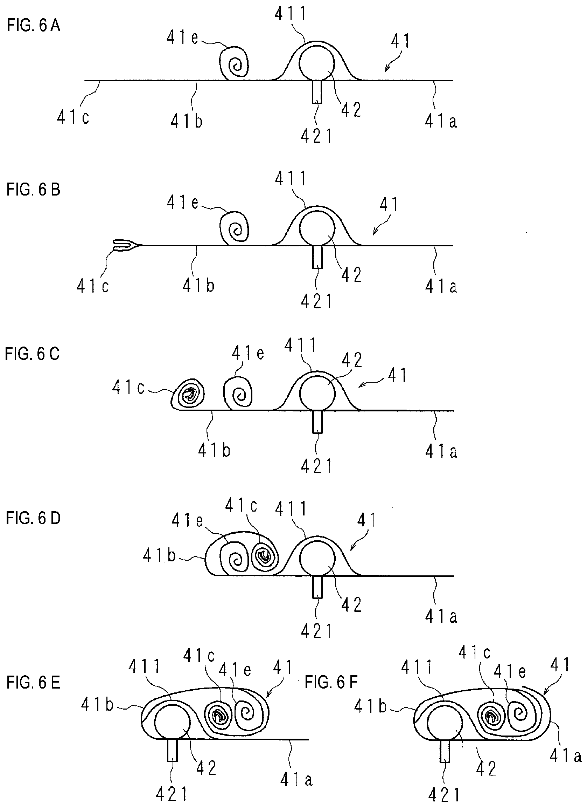

FIG. 6 illustrates how the airbag cushion 41 is folded to be stowed in the stowage portion 40. FIG. 6 illustrates cross sections, as viewed from above, of the airbag cushion 41 being folded into a state illustrated in FIG. 5D. As illustrated in FIG. 6A, the inflator 42 is accommodated in the accommodating portion 411. As illustrated in FIG. 6B, the end of the third portion 41c is folded into the interior of the airbag cushion 41 in a direction toward the second portion 41b. As illustrated in FIG. 6C, the third portion 41c is folded into a roll shape. The direction in which the third portion 41c is folded is a direction in which an end portion of the third portion 41c is first folded clockwise and rolled so that the right-hand panel is on the outside, and as a result, the third portion 41c is roll-folded counterclockwise when viewed from above. Hereinafter, this folding method is referred to as the "counterclockwise roll-folding." As illustrated in FIG. 6D, the third portion 41c is further folded in, and is disposed between the roll-folded protruding portion 41e and the inflater 42. As illustrated in FIG. 6E, the second portion 41b, the protruding portion 41e, and the third portion 41c are folded back toward the first portion 41a. Accordingly, the third portion 41c and the protruding portion 41e are disposed on the opposite side, from the state illustrated in the drawing 6D, with respect to the inflator 42. The third portion 41c is disposed between the inflater 42 and the protruding portion 41e. As illustrated in FIG. 6F, the first portion 41a is folded leftward and rearward so as to be wound around and cover the protruding portion 41e and the third portion 41c.

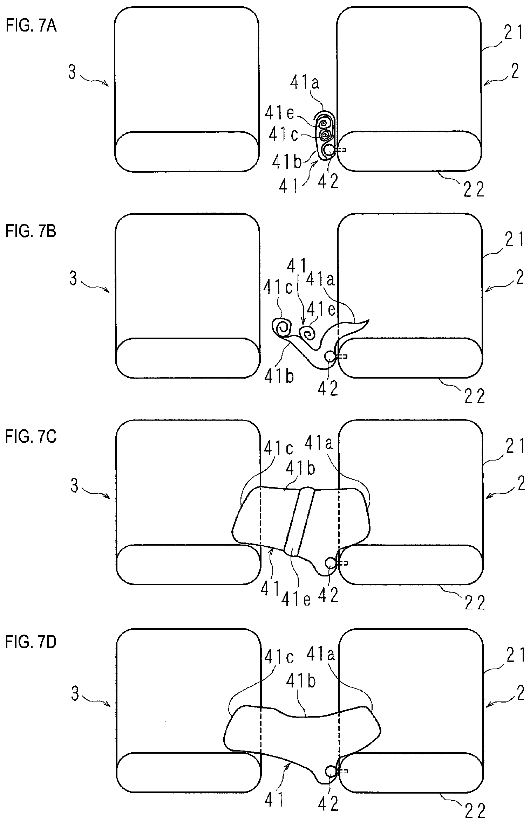

FIG. 7 is an explanatory diagram illustrating the process of deployment of the airbag cushion 41. FIG. 7 is a diagram of the passenger compartment 1 as viewed from above. FIG. 7A illustrates the state prior to the deployment. FIG. 7B illustrates the state immediately after the start of the deployment. After the start of the deployment, gas enters the second portion 41b, and then the first portion 41e wound around the protruding portion 41e and the third portion 41a is deployed, by the deploying force, from the folded state while being inclined in the right direction of the passenger compartment 1. In addition, the third portion 41c is pushed out by the expansion of the second portion 41b, and is deployed on the side opposite to the inflator 42 with respect to the protruding portion 41e. During this process, since the third portion 41c is roll-folded counterclockwise when viewed from above the passenger compartment 1, the third portion 41c is deployed as being inclined toward the assistant driver seat 3 by a force for deploying the third portion 41c from the folded state. Consequently, the airbag cushion 41 is transformed into a V-shaped state in plan view as illustrated in FIG. 7B.

FIG. 7C shows a state in which the horizontal portion 41d is developed. FIG. 7D illustrates a state in which the airbag cushion 41 is completely deployed. Once the horizontal portion 41d of the airbag cushion 41 is deployed, the bottom end of the protruding portion 41e in the state illustrated in the drawing 7B is pushed upward and becomes the front end. To put it differently, the direction of the roll axis (the longitudinal axis) of the protruding portions 41e is changed from the upward-downward direction to the front-to-rear direction. In the state illustrated in FIG. 7C, the roll-folding of the protruding portion 41e has not been developed. Thereafter, the protruding portion 41e is developed upward to be in a state illustrated in FIG. 7D.

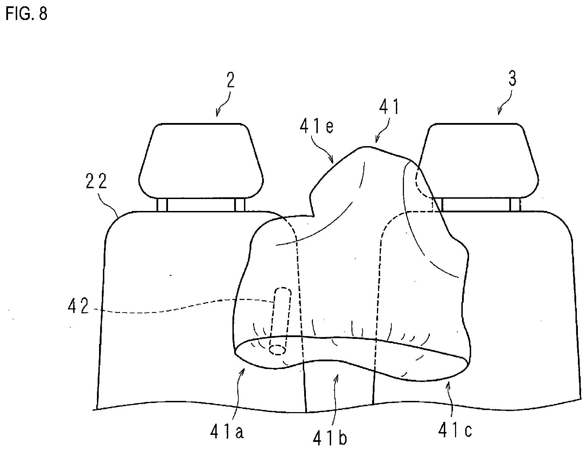

FIG. 8 is a front view illustrating the airbag cushion 41 in a completely deployed state. As illustrated in FIGS.7D and 8, in the airbag cushion 41 in the deployed state, the third portion 41c is in a state of riding on the assistant driver seat 3. Hence, it is possible to prevent the occupant seated in the driver seat 2 from moving toward the assistant driver seat 3. The restraint position of the airbag cushion 41 is fixed, and, in addition, the reaction force from the seat of the assistant driver seat 3 can be utilized to alleviate the impact force of the collision that would otherwise be received by the occupant.

According to the above-described configuration, during the deployment of the roll-shaped protruding portion 41e that has been folded with its two ends facing downwards, the roll axis (that is, the longitudinal axis) of the roll-shaped protruding portion 41e changes its direction from the upward-downward direction to the front-to-rear direction. Due to this act, the airbag cushion 41 can be stably deployed in the front-to-rear direction so as to provide sufficient protection of the occupant. In the present invention, the protruding portion 41e and the third portion 41c are folded into a roll shape, but may be folded into a bellows shape.

When a reference code is noted in a claim, the reference code is merely provided as a reference in correspondence with the reference code described in the embodiment in order to facilitate understanding of the claim. The scope of claims is not limited by the reference code.

The embodiments presently disclosed are to be considered as examples for all points, and are not restrictive. The technical features described in the examples can be combined with each other, and the scope of the invention is intended to include all changes within the scope of the claims and a scope equal to the claims. Furthermore, the independent and dependent claims set forth in the claims can be combined with each other in any and all combinations, regardless of the form of reference. Furthermore, the claims are in a format in which a claim refers to two or more other claims (multiple claim format), but the present invention is not limited to this format. A multiple claim (multi-multi claim) may be written using a format that cites at least one multiple claim.

### REFERENCE SIGNS LIST

100. Vehicle
1. Passenger compartment
2. Driver seat (Seat)
3. Assistant driver seat (Seat)
4. Side airbag device (Airbag device)
41. Airbag cushion
41a. First portion
41b. Second portion
41c. Third portion
41d. Horizontal portion
41e. Protruding portion
41f. Upper-surface gusset portion
41g. Bottom-surface gusset portion
411. Accommodating portion
42. Inflator

## Claims

1. A method of manufacturing an airbag device (4) that comprises an airbag cushion (41) operable to expanded and deployed in a passenger compartment (1) of a vehicle (100) and thus to restrain an occupant seated on a seat (2, 3) from a side, the method comprising the step of:
preparing the airbag cushion (41) including: a horizontal portion (41d) having an accommodating portion (411) for accommodating an inflater (42) for injecting a gas for expansion and deployment, the horizontal portion (41d) being operable to be deployed horizontally in the vehicle (100); and a protruding portion (41e) being operable to be deployed upward from a central portion of the horizontal portion (41d), wherein the horizontal portion (41d) of the airbag cushion (41) includes a first portion (41a) extending from the accommodating portion (411), a second portion (41b) extending horizontally in an opposite direction to the first portion (41b), and a third portion (41c) extending further from the second portion (41b);
folding downwards from an upper side of the vehicle (100), the protruding portion (41e) into a roll shape or into a bellows shape;
folding the protruding portion (41e) to come into contact with a side surface of the horizontal portion (41d) so that a longitudinal axis of the folded protruding portion (41e) is aligned in an upward-downward direction;
folding the third portion (41c) into a roll shape or into a bellows shape;
disposing the folded third portion (41c) between the protruding portion (41e) and the inflator (42);
folding the second portion (41b), the protruding portion (41e), and the third portion (41c), all disposed on a side opposite to the first portion (41a) with respect to the accommodating portion (411) back toward the first portion (41a); and
folding the first portion (41a) so as to wind around and cover the protruding portion (41e) and the third portion (41c).

2. The method of manufacturing an airbag device according to Claim 1 further comprising: before the step of folding the third portion (41c) into a roll shape or into a bellows shape,
a step of folding an end of the third portion (41c) into the interior of the airbag cushion (41) in a direction toward the second portion (41b).

3. The method of manufacturing an airbag device (4) according to claim 1 or 2, wherein the airbag cushion (41) includes a bottom-surface gusset portion (41g) forming a surface facing the protruding portion (41e) when the airbag cushion (41) is in a deployed state, and
wherein the method further comprises a step of folding the bottom-surface gusset portion (41g) so that an inner surface of the airbag cushion (41) comes into contact with the bottom-surface gusset portion (41g) and that an outer surface of the airbag cushion (41) is mountain-folded.

4. An airbag device (4) comprising an airbag cushion (41) operable to be expanded and deployed in a passenger compartment (1) of a vehicle (100) and thus to restrain an occupant seated on a seat (2, 3) from a side,
wherein the airbag cushion (41) includes: a horizontal portion (41d) having an accommodating portion (411) for accommodating an inflator (42) for injecting a gas for expansion and deployment, the horizontal portion being operable to be deployed in a horizontal direction of the vehicle (100); and a protruding portion (41e) being operable to be deployed in an upward direction of the vehicle (100) from a central portion of the horizontal portion (41d),
wherein the horizontal portion (41d) includes a first portion (41a) extending from the accommodating portion (411), a second portion (41b) extending horizontally in an opposite direction to the first portion (41a), and a third portion (41c) further extending from the second portion (41b),
wherein the airbag device (4) includes: a configuration in which the protruding portion (41e) is folded, downwards from an upper side of the vehicle (100), into a roll shape or into a bellows shape;
a configuration in which the roll-shaped protruding portion (41e) is folded to come into contact with a side surface of the horizontal portion (41d) so that a longitudinal axis of the folded protruding portion (41e) is aligned in an upward-downward direction;
a configuration in which the third portion (41c) is folded into a roll shape or into a bellows shape;
a configuration in which the folded third portion (41c) is disposed between the protruding portion (41e) and the inflator (42);
a configuration in which the second portion (41b), the protruding portion (41e), and the third portion (41c), all disposed on a side opposite to the first portion (41b) with respect to the accommodating portion (411), are folded back toward the first portion (41a); and
a configuration in which the first portion (41a) is folded so as to be wound around and cover the protruding portion (41e) and the third portion (41c).
